(19) Europäisches Patentamt
European Patent Office
Office européen des brevets

(11) Publication number: 0 000 544
B1

# (12) EUROPEAN PATENT SPECIFICATION

(45) Date of publication of patent specification: 04.08.82

(51) Int. Cl.³: C 08 K 5/51, C 08 L 69/00

(21) Application number: 78100439.5

(22) Date of filing: 19.07.78

## (54) Heat stabilized thermoplastic resins containing compounds with phosphorus to phosphorus bonds.

(30) Priority: 20.07.77 US 817326

(43) Date of publication of application:
07.02.79 Bulletin 79/3

(45) Publication of the grant of the patent:
04.08.82 Bulletin 82/31

(84) Designated Contracting States:
BE DE FR GB NL

(56) References cited:
DD - A - 86 394
US - A - 2 403 792
US - A - 3 032 591

(73) Proprietor: THE DOW CHEMICAL COMPANY
Dow Center 2030 Abbott Road Post Office Box 1967
Midland Michigan 48640 (US)

(72) Inventor: McClendon Baggett, Joseph
Route 1
Freeport County of Brazoria Texas (US)
Inventor: Ham, George Edward
112, Begonia
Lake Jackson County of Brazoria Texas (US)

(74) Representative: Casalonga, Alain et al,
BUREAU D.A. CASALONGA OFFICE JOSSE & PETIT Baaderstrasse 12-14
D-8000 München 5 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 000 544 B1

Courier Press, Leamington Spa, England.

# Heat stabilized thermoplastic resins containing compounds with phosphorus to phosphorus bonds

This invention is concerned with the heat and/or oxygen stabilization of thermoplastic resins with organo phosphorus derivatives.

Organophosphorus compounds are known as stabilizers for thermoplastic material such as tetrakis (2,4-di-t.butylphenyl)-4,4'-bis(phenylyldiphosphonite) or 3,9-di(octadecyloxy)-2,4,8,10-tetra-oxa-3,9-diphosphaspiro-5,5-undecane.

It has been found that compounds having a phosphorus to phosphorus bond are useful to stabilize thermoplastic polymers or resins from the effects of heat and/or oxygen during the molding of a blend containing the polymers and a compound having one or more phosphorus to phosphorus bonds.

Such compounds are known per se namely by US 2.403.792 teaching their use as extreme pressure lubricating agent, by East German patent 86.394 disclosing their use as starting products for the preparation of stabilizers and by US patent 3.032.591 relating to their use as polymerization accelerator for epoxy resins or as preignition firing suppressants in motor fuels.

The invention is directed to a composition comprising a thermoplastic polymer and a stabilizing amount of an organo-phosphorus compound having one of the formulas

I. $(R_1)(R_2)P(=X)_a—P(=X)_a(R_1)(R_2)$

II. $(P—R_1)_n$

III. $(R_1)(R_2)P(=X)_a—P(R_3)—P(=X)_a(R_1)(R_2)$

wherein a is independently 0 or 1, n is 3 to 6, X is oxygen or sulfur, $R_1$, $R_2$ and $R_3$ are independently dialkylamino, alkoxy, aryloxy, alkyl, aryl, alkaryl, aralkyl, or $R_1$ and $R_2$ taken with the P atom represent a cyclic structure having only carbon, phosphorus and oxygen atoms in the cyclic structure.

A preferred species of the invention is a thermoplastic polycarbonate resin containing a compound of the formula

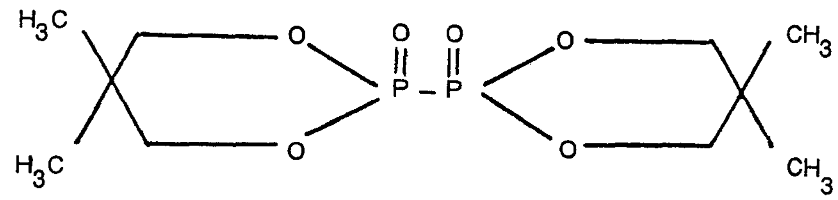

The blends or compositions of this invention are thus useful to make molded parts as in the injection molding of diverse articles such as, for example, cups, glasses, valve fittings and appliances covers.

The thermoplastic resins or polymers which can be used in the compositions of this invention are illustrated by polyalkylenes such as polyethylene, polypropylene and related copolymers; polyvinyl chloride; vinyl polymers such as polystyrene and related copolymers such as styrene-butadiene-acrylonitrile copolymers; acrylic polymers such as polyacrylonitriles and poly(methylmethacrylates) and related copolymers; polyesters such as poly(ethylene terephthalates); and aromatic polycarbonates such as bisphenol A polycarbonate and copolycarbonates with diverse dihydroxy phenols.

The compounds having at least one phosphorus-to-phosphorus bond which can be used in the invention are illustrated by, and not limited to, the following:

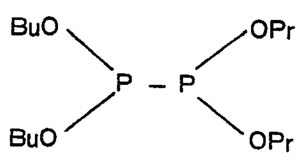

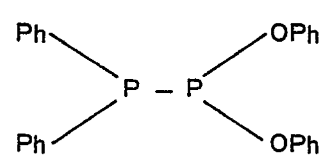

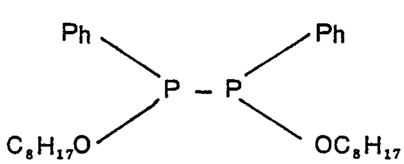

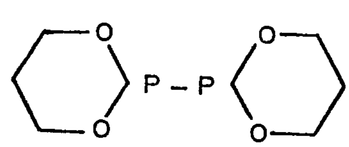

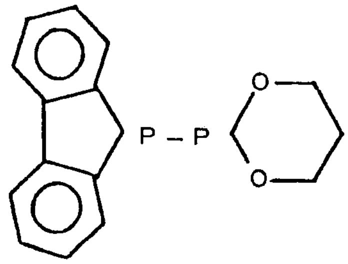

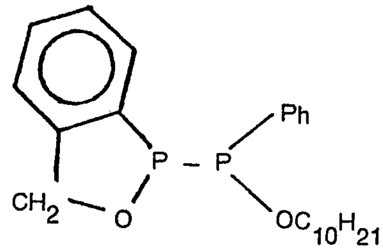

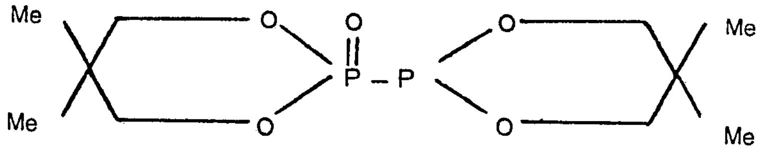

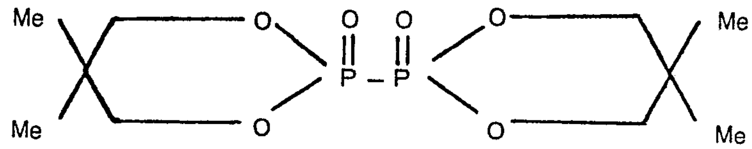

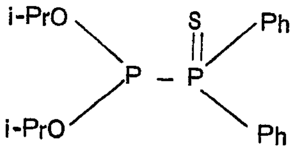

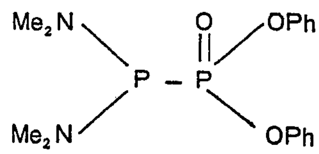

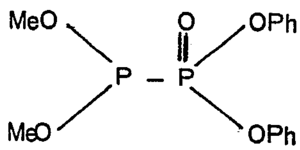

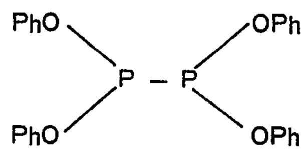

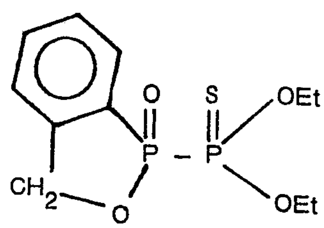

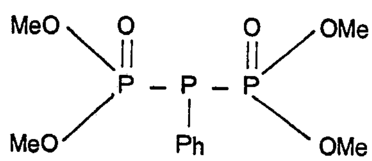

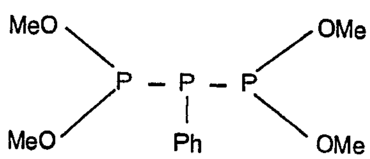

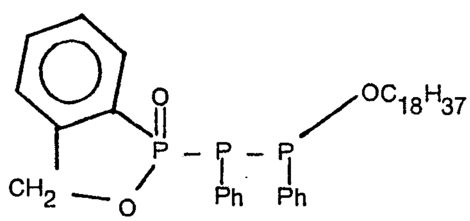

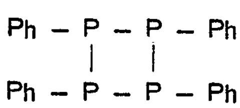

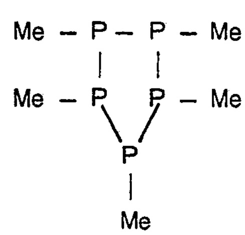

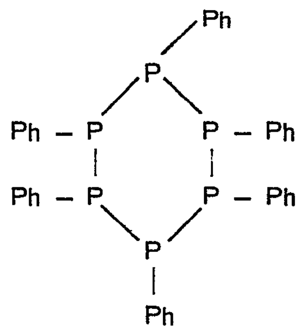

wherein
Ph signifies the phenyl group,
Me signifies the methyl group,
Et signifies the ethyl group, and
i-Pr signifies the isopropyl group.

For the purposes of this invention a stabilizing amount of the compounds is defined as a range from about 0.01 to about 1.0 percent by weight and preferably about 0.05 to about 0.25 based on the total weight of the polymer.

The compositions of this invention may also be blended with other conventional additives such as ultra violet light stabilizers, antioxidants, dyes and pigments.

Examples 1 through 4 and comparative runs A through D

Stabilizer A, bis(5,5-dimethyl-2-oxo-1,3,2-dioxaphosphorinanyl), was prepared as follows. Into a flask fitted with stirrer, nitrogen purge, feeding funnel, thermometer, and reflux condenser were charged 50 ml of dry benzene and 4.6 grams (0.1 mole) sodium:paraffin 50:50 dispersion. The mixture was stirred about 30 minutes at room temperature with a slow nitrogen purge and then a solution containing 15 grams, (0.1 mole) of 2-hydroxy-5,5-dimethyl-1,3,2-dioxaphosphorinan dissolved in 50 ml of dry benzene was fed in at such a rate that the temperature was kept below 30°C. The contents were stirred for 15 minutes at 25°C and then a solution of 12.0 grams (0.066 mole) of 2-chloro-2-oxo-5,5-dimethyl-1,3,2-dioxaphosphorinan dissolved in benzene (50 ml) was fed dropwise at 5 to 7°C. The reaction temperature was controlled by rate of addition and an ice acetone-water bath. After the feed was in, the reactants were stirred and digested at 25°C for three hours. The contents were again cooled to 5°C by an external source at which time 100 ml of an aqueous 5 percent $NaHCO_3$ solution was added and stirred for a few minutes. The contents were transferred to a separating funnel and allowed to phase out. At the interface a solid forms. The solid was filtered off then dried. It had a melting point of 222°C. The crude product was recrystallized using $CHCl_3$:ethyl acetate (2:1), filtered then washed with water, filtered again then dried. The white needle crystals weighed 5.15 grams and had a melting point of 255°C. The product was identified by phosphorus-31 Nuclear Magnetic Resonance; Infrared; and Mass Spectroscopy as having the formula:

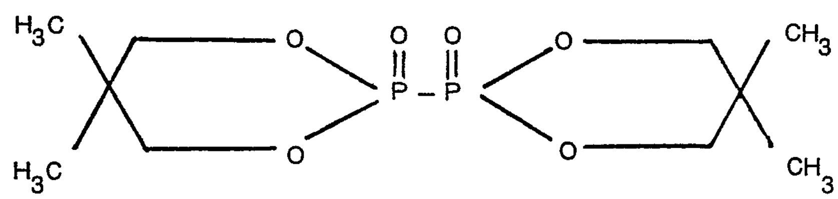

Stabilizer B was prepared as follows. Into a flask equipped with stirrer, nitrogen purge, thermometer, and reflux condenser were charged 175 ml of benzene. The flask was purged with nitrogen to remove the air and then 25 ml of benzene was distilled off to remove any trace of water. The contents were cooled to 25°C and then with stirring 35.8 grams (0.2 mole) of dichlorophenyl phosphine was added, all at once, followed by the addition in the same manner 49.6 grams (0.4 mole) of trimethyl phosphite. The mixture was refluxed for three hours, cooled, and transferred to a Rinco flask where the benzene was removed by distillation using high vacuum and 90°C temperature. The resulting product was a colorless liquid, having a weight of 53 grams, and upon standing overnight began to crystallize. The product was identified by Phosphorus 31 Nuclear Magnetic Resonance to be the compound having the formula:

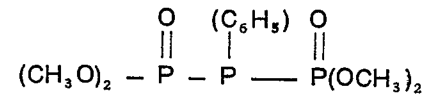

Stabilizer C was prepared as follows. 33 grams (0.15 mole) of chlorodiphenylphosphine and 18.6 grams (0.15 mole) of trimethyl phosphite was fed into a flask equipped with stirrer, thermometer, feeding funnel, nitrogen purge, and reflux condenser containing 150 ml of dry benzene. The reaction mixture was refluxed for three hours under a very slow nitrogen purge. The reactants were cooled, transferred to a rotary evaporator where the benzene was removed by distillation under vacuum. 42 grams of a slightly yellowish syrup was recovered. After standing for several days, the syrup crystallized into a composition having a paste-like consistency. After examination by phosphorus-31 NMR, the product was identified as a mixture of 20 percent of

$$(C_6H_5)_2—P(O)—P—(OCH_3)_2$$

and about 40 percent of

$$(C_6H_5)_2—P—P(C_6H_5)_2.$$

Stabilizer D was prepared as follows. 1.2 grams (0.05 mole) of magnesium was weighed into a 125 ml flask equipped with magnetic stirrer, thermometer, feeding funnel, $N_2$ purge and reflux condenser. After purging with $N_2$ 50 ml of tetrahydrofuran was added to the magnesium. The contents were stirred while phenyl dichlorophosphine 8.9 grams (0.05 mole) was fed in dropwise with occasional external cooling with a water bath to maintain a reaction temperature of 50° to 60°C. After phosphine addition was completed the contents were stirred at 50°C for four hours. The reaction mixture was cooled to room temperature (25°C), transferred to a separating funnel and washed with 30 ml of water. The water was removed and the oil layer was allowed to evaporate in air to about 50 percent of the original volume. Then a second addition of 30 ml of water precipitated 2.1 grams of a white solid which, when recrystallized from acetonitrile, gave a product with a melting point of 150°C, consistent with reported literature results. The structure of the compound was determined to be as follows:

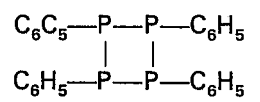 or $(P—C_6H_5)_4$

A copolycarbonate of phenolphthalein and Bisphenol A, hereinafter known as Polycarbonate E, was prepared by condensing 51.0 kg (112.5 pounds) of Bisphenol A and 17.0 kg (37.5 pounds) of phenolphthalein with 31 kg (68 pounds) of phosgene. The reaction was carried out in a solution of 544 kg (1200 pounds) of methylene chloride and 73.7 kg (162.5 pounds) pyridine in a 757 liters (200 gallon) glass-lined Pfaudler reactor 'PFAUDLER' is a registered Trade Mark. Para tertiary butyl phenol 0.95 kg (2.10 pounds) was added as a terminator to control molecular weight.

After polymerization, the pyridine hydrochloride formed in the reaction and any excess pyridine was removed by contacting the polymer solution with a solution of 34 kg (76 pounds) of 12N HCl in 114 liters (30 gallons) of distilled water. An aliquot of the polymer solution in methylene chloride was removed and washed two additional times with 30 volume percent distilled water. The water was separated and removed after each wash. Final traces of water were removed by contacting the solution with silica gel. The polymer solution was then filtered, the polymer precipitated with hexane, and air dried.

The copolycarbonate was 25 weight percent phenolphthalein and had a molecular weight of 33,000 weight average molecular weight by gel permeation chromatography.

Stabilizers A, B, C and D prepared as above were blended with Polycarbonate E using ethanol as the solvent.

Comparative Runs A, B, C and D were made employing no stabilizers and two commercially available stabilizers. Stabilizer F was tetrakis (2, 4-di-t-butylphenyl)-4,4'-bis-(phenyldiphosphonite) available as Sandostab P—EPQ®. 'Sandostab' is a registered Trade mark of 'SANDOZ'. Stabilizer G has 3,9-(di(octadecyloxy)-2,4,8,10-tetraoxa-3,9-diphosphaspiro-5,5-undecane available as Weston 618®. In Examples 1 through 4 and Comparative Runs C and D, the stabilizer level was 1000 parts per million.

The compositions were then air dried followed by vacuum drying at 110°C for four hours. One gram of each composition was weighed into a separate 13 by 100 mm test tube and purged with nitrogen. The test tubes were inserted into a 4.4 cm (1—3/4 inch) deep hole in an aluminum block with the temperature being controlled at 350°C. The heat cycle time was 30 minutes. A nitrogen pad (a pressure of about 3.7 mm of mercury) was maintained on the samples during the heat cycle.

After the heat cycle, the sample was cooled. The test tube was broken and the composition was

dissolved in methylene chloride. The glass particles were removed by filtration and the filtrate was diluted with more methylene chloride to make up a 100 ml solution. The color was determined on the solution by using a "Spectronic" Bausch and Lomb Photometer at 350 m$\mu$ and reported in Table I as percent transmittance.

Table I

| | Stabilizer | Percent Transmittance |
|---|---|---|
| Example 1 | A | 94 |
| Example 2 | B | 92 |
| Example 3 | C | 94 |
| Example 4 | D | 84 |
| Comparative Run A | None, no heating | 97 |
| Comparative Run B | None | 73 |
| Comparative Run C | F | 92 |
| Comparative Run D | G | 94 |

Example 5 and Comparative Run E

6.8 kg (15 pounds) of high density polyethylene having a melt index of 5.0 and a density of 9.962 was dry blended with 3.4 grams (0.12 ounces) of Stabilizer A. The mixture was then double-pass extruded at 149°C on a 3.2 cm (1—1/4 inch) extruder with a nitrogen purge on the feed hopper of the extruder. After blending and extruding, the melt index of the polyethylene composition containing 500 parts per million of Stabilizer A was determined using ASTM Procedure D—1238.

The polyethylene composition was next subjected to a multiextrusion test employing the same extruder as above, but with the temperature of 260°C. After each pass through the extruder, the melt index of a sample of the extruded composition was determined. A decrease in the melt index signified a breaking down and crosslinking of the polymer. The best stabilizer would result in the smallest change in the melt index. In Comparative Run E, the same polyethylene as in Example 5 was extruded twice at 260°C, the polyethylene in the comparative run not containing any stabilizer.

The melt index values after extrusion are reported in Table II.

Table II

| Test Sample | Melt Index Example 5 | Melt Index Comparative Run E |
|---|---|---|
| Original Blend | 4.92 | 4.89 |
| After First Extrusion at 260°C | 3.18 | 2.76 |
| After Second Extrusion at 260°C | 1.60 | 0.84 |

Similar results were obtained with polypropylene.

Example 6 and Comparative Run F

300 grams of Polycarbonate E was slurried with approximately 2 liters of distilled water in a Waring Blendor. While the water-polymer slurry was vigorously agitated, a solution of 1.5 grams of Stabilizer G in 15 milliliters of methylene chloride was slowly added. The polycarbonate powder was then collected on a filter and air dried.

This procedure was repeated adding 1.5 grams of Stabilizer A to 300 grams of Polycarbonate E to give a composition containing 5000 parts per million of Stabilizer A.

The two compositions were vacuum oven dried and then injection molded. The molded samples were heat aged in a circulating air oven at 120°C. They were removed at various times and their yellow index was determined according to ASTM—1925—63T. The results of the tests are shown in Table III.

Table III

| | Yellow Index | | | |
|---|---|---|---|---|
| | 0 days | 2 days | 3 days | 7 days |
| Example 6 | 5.51 | 7.91 | 9.02 | 11.74 |
| Comparative Run F | 6.22 | 10.39 | 11.67 | 14.57 |

The data in Table III shows that the polycarbonate composition containing Stabilizer A is superior to a commercial stabilizer as far as reducing the level of color formation as determined by the yellow index.

## Claims

1. A composition comprising a thermoplastic polymer and a stabilizing amount from about 0.01 to about 1.0 percent by weight based on the total weight of the polymer of an organo phosphorus compound characterized in that the organo phosphorus compound has the formula

$$\text{I.}\quad (R_1)(R_2)P(=X)_a—P(=X)_a(R_1)(R_2)$$

wherein a is independently 0 or 1, X is oxygen or sulfur, $R_1$ and $R_2$ are independently dialkylamino, alkoxy, aryloxy, alkyl, aryl, alkaryl, aralkyl, or $R_1$ and $R_2$ taken with the phosphorus atom represent a cyclic structure having only carbon, phosphorus and oxygen atoms in the cyclic structure.

2. A composition comprising a thermoplastic polymer and a stabilizing amount, from about 0.01 to about 1.0 percent by weight based on the total weight of the polymer, of an organo phosphorus compound characterized in that the organo phosphorus compound has the formula

$$(P—R_1)_n$$

wherein n is 3 to 6, $R_1$ is dialkylamino, alkoxy, aryloxy, alkyl, aryl, alkaryl or aralkyl.

3. A composition comprising a thermoplastic polymer and a stabilizing amount, from about 0.01 to about 1.0 percent by weight based on the total weight of the polymer, of an organo phosphorus compound characterized in that the organo phosphorus compound has the formula

$$(R_1)(R_2)P(=X)_a—P(R_3)—P(=X)_a(R_1)(R_2)$$

wherein a is independently 0 or 1, X is oxygen or sulfur, $R_1$ $R_2$ and $R_3$ are independently dialkylamino, alkoxy, aryloxy, alkyl, aryl, alkaryl, aralkyl, or $R_1$ and $R_2$ taken with the phosphorus atom represent a cyclic structure having only carbon, phosphorus and oxygen atoms in the cyclic structure.

4. The composition as in claim 1 wherein the organophosphorus compound has the formula

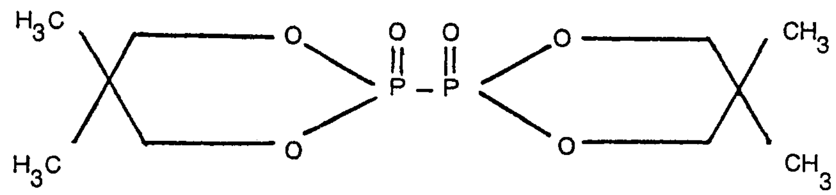

5. The composition as in anyone of claims 1 to 3 wherein the thermoplastic polymer is a polycarbonate.

6. The composition as in anyone of claims 1 to 3 wherein the organo-phosphorus compound is present in an amount from 0.05 to 0.25 percent by weight based on the total weight of the polymer.

## Patentansprüche

1. Eine Verbindung, die ein thermoplastisches Polymer und eine Organophosphorverbindung in einer zur Stabilisierung ausreichenden Menge zwischen etwa 0,01 und etwa 1,0 Gewichtsprozent bezogen auf das Gesamtgewicht des Polymers enthält, dadurch gekennzeichnet, daß die Organophosphorverbindung die folgende Formel hat:

$$\text{I.}\quad (R_1)(R_2)P(=X)_a—P(=X)_a(R_1)(R_2)$$

darin ist a unabhängig voneinander 1 oder 2, X ist Sauerstoff oder Schwefel, und $R_1$ und $R_2$ sind unab-

hängig Dialkylamino-, Alkoxy-, Aryloxy-, Alkyl-, Aryl-, Alkaryl- oder Aralkylgruppen, oder $R_1$ und $R_2$ bilden zusammen mit dem Phosphoratom einen Ring, in dem nur Kohlenstoff-, Phosphor- und Sauerstoffatome enthalten sind.

2. Eine Verbindung, die ein thermoplastisches Polymer und eine Organophosphorverbindung in einer zur Stabilisierung ausreichenden Menge Zwischen etwa 0,01 und etwa 1,0 Gewichtsprozent bezogen auf das Gesamtgewicht des Polymers enthält, dadurch gekennzeichnet, daß die Organophosphorverbindung die folgende Formel hat:

$$(P—R_1)_n$$

darin ist n = 3 bis 6, $R_1$ ist eine Dialkylamino-, Alkoxy-, Aryloxy-, Alkyl-, Aryl-, Alkaryl- oder Aralkylgruppe.

3. Eine Verbindung, die ein thermoplastisches Polymer und eine Organophosphorverbindung in einer zur Stabilisierung ausreichenden Menge zwischen etwa 0,01 und etwa 1,0 Gewichtsprozent bezogen auf das Gesamtgewicht des Polymers enthält, dadurch gekennzeichnet, daß die Organophosphorverbindung die folgende Formel hat:

$$(R_1)(R_2)P(=X)_a—P(R_3)—P(=X)_a(R_1)(R_2)$$

darin ist a unabhängig 0 oder 1, X ist Sauerstoff oder Schwefel, $R_1$, $R_2$ und $R_3$ sind unabhängig Dialkylamino-, Alkoxy-, Aryloxy-, Alkyl-, Aryl-, Alkaryl- oder Aralkylgruppen oder $R_1$ und $R_2$ bilden zusammen mit dem Phosphoratom einen Ring, in dem nur Kohlenstoff-, Phosphor- und Sauerstoffatome enthalten sind.

4. Die Verbindung gemäß Anspruch 1, wobei die Organophosphorverbindung die folgende Formel hat:

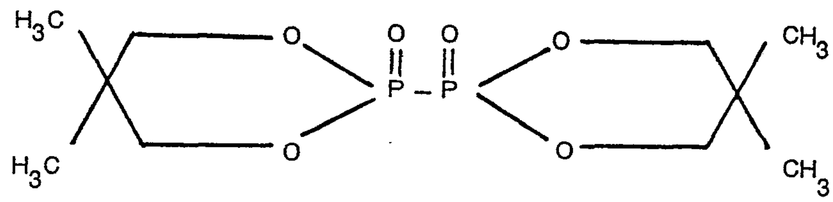

5. Die Verbindung gemäß einem beliebigen der Asprüche 1 bis 3, wobei es sich bei dem thermoplastischen Polymer um ein Polycarbonat handelt.

6. Die Verbindung gemäß einem beliebigen der Ansprüche 1 bis 3, worin die Organophosphorverbindung in einer Menge von 0,05 bis 0,25 Gewichtsprozent bezogen auf das Gesamtgewicht des Polymers enthalten ist.

**Revendications**

1. Composition comprenant un polymère thermoplastique et une quantité stabilisante allant d'environ 0,01 à 1,0% en poids, calculée par rapport au poids total du polymère, d'un composé organophosphoré, caractérisée par le fait que le composé organophosphoré a la formule:

$$\text{I.}\ (R_1)(R_2)P(=X)_a—P(=X)_a(R_1)(R_2)$$

dans laquelle a est indépendamment 0 ou 1; X est de l'oxygène ou du soufre; $R_1$ et $R_2$ sont indépendamment des groupes dialkylamino, alcoxy, aryloxy, alkyle, aryle, alkaryle, aralkyle, ou bien $R_1$ et $R_2$ pris avec l'atome de phosphore représentent une structure cyclique ayant seulement des atomes de carbone, de phosphore et d'oxygène dans la structure cyclique.

2. Composition comprenant un polymère thermoplastique et une quantité stabilisante allant d'environ 0,1 à environ 1% en poids, calculée par rapport au poids total du polymère, d'un composé organophosphoré, caractérisée par le fait que le composé organophosphoré a la formule:

$$(P—R_1)_n$$

dans laquelle n est 3 à 6; $R_1$ est un groupe dialkylamino, alcoxy, aryloxy, alkyle, aryle, alkaryle ou aralkyle.

3. Composition comprenant un polymère thermoplastique et une quantité stabilisante allant d'environ 0,01 à environ 1% en poids, calculée par rapport au poids total du polymère, d'un composé organophosphoré, caractérisée par le fait que le composé organophosphoré a la formule:

$$(R_1)(R_2)P(=X)_a—P(R_3)—P(=X)_a(R_1)(R_2)$$

dans laquelle a est indépendamment 0 ou 1; X est de l'oxygène ou du soufre; $R_1$, $R_2$ et $R_3$ sont indépendamment des groupes dialkylamino, alcoxy, aryloxy, alkyle, aryle, alkaryle, aralkyle, ou bien $R_1$ et $R_2$ pris avec l'atome de phosphore représentent une structure cyclique ayant seulement des atomes de carbone, de phosphore et d'oxygène dans la structure cyclique.

4. Composition selon la revendication 1, dans laquelle le composé organophosphoré a la formule:

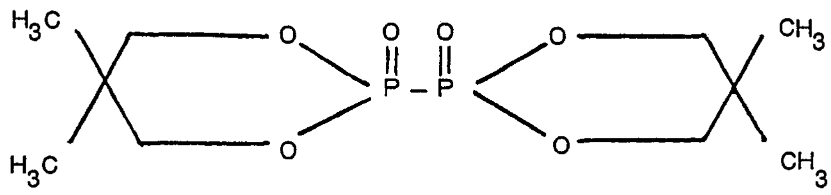

5. Composition selon l'une quelconque de revendications 1 à 3, dans laquelle le polymère thermoplastique est un polycarbonate.

6. Composition selon l'une quelconque des revendications 1 à 3, dans laquelle le composé organophosphoré est présent à raison d'environ 0,05 à 0,25% en poids, calculé par rapport au poids total du polymère.